# EUROPEAN PATENT SPECIFICATION

(11) **EP 2 141 286 B1**
(45) Date of publication and mention of the grant of the patent: **06.06.2012**
(21) Application number: 08739874.9
(22) Date of filing: 04.04.2008
(51) Int. Cl.: E02D 5/56, E02D 5/24, E02D 5/80

(54) **SPIRAL STEEL PIPE PILE**
SPIRALFÖRMIGER STAHLROHRPFAHL
PIEU TUBULAIRE EN ACIER EN SPIRALE

(30) Priority: 09.04.2007 JP 2007101229
(43) Date of publication of application: 06.01.2010
(73) Proprietor: Goto, Tsuneo, Kumamoto 861-1102 (JP)
(72) Inventor: Goto, Tsuneo, Kumamoto 861-1102 (JP)
(74) Representative: Staudt, Hans-Peter
(86) International application number: PCT/JP2008/056768
(87) International publication number: WO 2008/126789

(56) References cited:
- JP-A- 09 119 235
- JP-A- 2002 302 961
- JP-A- 2003 328 354
- JP-A- 2005 139 614
- US-A1- 2006 051 183

## Description

### Technical Field

The present invention relates to a foundation pile for the foundation of a building.

### Background Art

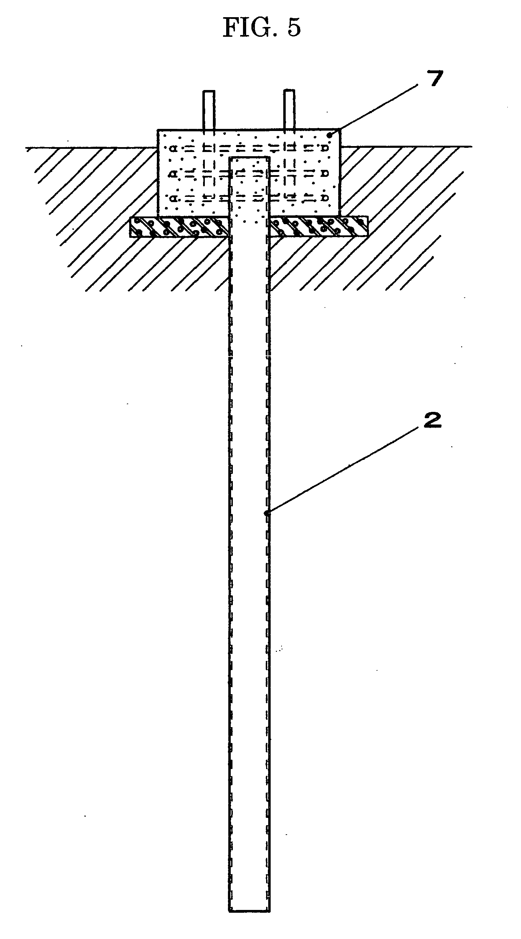

As shown in FIG. 5, conventional foundation piles (2) used for the foundation of buildings are driven into the ground inside a shallow hole, and the head of the foundation pile, which sticks out from the ground, is covered with reinforced concrete with anchor bolts sticking out on top, and thus, the foundation (7) is constructed and a pillar for a building or the like can stand on the foundation.

A method for driving a pile using a hammer is generally used to build conventional foundation piles, but this causes strong vibrations in the ground, as well as noise. As a result, residents in the neighborhood are bothered by vibration and noise.

Meanwhile, the present applicant proposed a spiral pile as a pile causing little vibration and noise when driven into the ground and made the product available on the market (see Patent Documents 1 to 4).
Patent Document 1: Japanese Unexamined Utility Model Publication S59 (1984)-19639
Patent Document 2: Japanese Translation of International Unexamined Patent Publication H10 (1998)-513237
Patent Document 3: Japanese Patent Application 2002-172089
Patent Document 4: Japanese Unexamined Patent Publication H10 (1998)-296342.

Further, a spiral steel pipe pile according to the preamble of the patent claim is known from JP 2002 302961A.

However, conventional spiral piles generally have an outer diameter of approximately 100 mm or less, and therefore, products are in such a form that the entirety of the pile is spiral or a spiral portion is inserted at the end of a cylindrical pile. However, the present inventor conducted diligent research, and as a result found that steel pipes used as foundation piles have an outer diameter of no less than 100 mm and the resistance in the steel pipe portion when it is driven into the ground becomes greater than the force with which the spiral portion pulls the steel pipe, and that it is thus difficult for conventional piles in spiral form to be smoothly driven into a foundation. In some cases, a problem arises, such that the joint between the steel pipe portion and the spiral portion breaks.

### Disclosure of the Invention

### Problem to Be Solved by the Invention

An object of the present invention is to provide a new pile to replace conventional foundation piles, so that piles can be driven into the ground with little vibration and noise, and thus do not bother residents in the neighborhood, and in particular, to provide a spiral steel pipe pile that can be smoothly driven into the ground even when the outer diameter is more than 100 mm.

### Means for Solving Problem

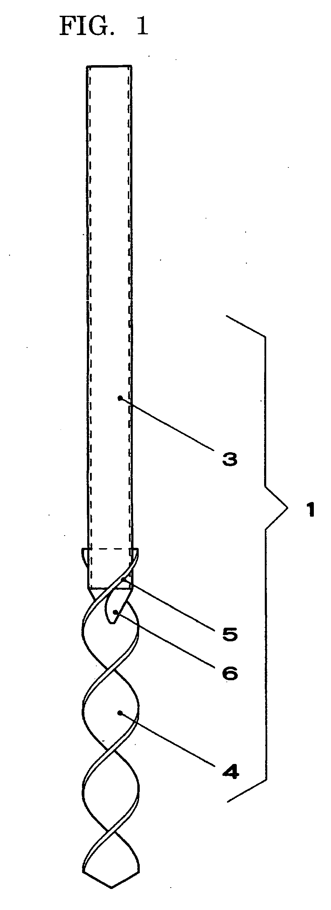

As shown in FIG. 1, a spiral steel pipe pile (1) is provided. This pile is gained by attaching a spiral portion (4) gained by twisting flat steel to a steel pipe (3), which is a conventional foundation pile (2). Specifically, it is a spiral steel pipe pile having a steel pipe (3), a spiral portion (4) gained by twisting flat steel having the same or a greater width than the outer diameter of the steel pipe, and a spiral slit (5) for inserting the spiral portion at the lower end of the steel pipe, characterized in that the spiral portion is inserted through the slit, and the steel pipe and the spiral portion are welded together in such a state that the two share the same center line, and a cover (6) in conical form is welded to the lower end of the steel pipe so that the hole in the spiral insertion portion is covered.

Here, the present applicant successfully developed technology for manufacturing this spiral portion for the first time, and spiral portions are currently manufactured using a spiral manufacturing machine and sold (see Patent Document 4).

Though conventional foundation piles are driven into the ground using a hammer, this spiral steel pipe pile is pressed into the ground while being rotated. As a result, there is little vibration and noise when the pile is driven into the ground.

The spiral steel pipe pile has another excellent feature. It has strong resistance against loads in the vertical direction.

The reason is as follows. Conventional foundation piles bear a load and support the building in the vertical direction with a force of friction around the surface and a supporting force at the end.

In contrast, the spiral steel pipe pile has a spiral portion that is screwed into the ground, and thus has a strong resistance to loads in the vertical direction, so that the pile cannot be pushed in or pulled out unless the stratum around the pile is broken.

### Effects of the Invention

First, when a spiral steel pipe pile is used as described above, the pile is driven into the ground with little vibration and noise, and therefore does not bother residents in the neighborhood very much.

Second, the resistance to the load in the vertical direction is greater than that of conventional foundation piles, and the pile according to the invention has excellent resistance to loads, particularly in soft ground. Here, the resistance to the load in the horizontal direction is almost the same between the two.

Furthermore, according to the present invention, the joint between the steel pipe and the spiral portion is stronger, and the cover in conical form provided at the lower end of the steel pipe so as to cover the hole in the spiral insertion portion makes it possible to drive a steel pipe pile smoothly into the ground.

### Brief Description of the Drawing

FIG. 1 is a front diagram showing the spiral steel pipe pile according to the present invention;
FIG. 2 is a front cross sectional diagram showing the spiral steel pipe pile according to the present invention when driven into the ground as in the first embodiment;
FIG. 3 is a front cross sectional diagram showing the spiral steel pipe piles according to the present invention when driven into the ground as in the second embodiment;
FIG. 4 is a plan diagram showing the spiral steel pipe piles according to the present invention when driven into the ground as in the second embodiment;
FIG. 5 is a front cross sectional diagram showing a conventional foundation pile;
FIG. 6A is a front diagram and FIG. 6B a side diagram showing the lower end of a steel pipe pile;
FIG. 7A is a front diagram and FIG. 7B a side diagram showing a steel pipe pile with a spiral portion inserted;
FIG. 8A is a front diagram and FIG. 8B a side diagram showing a steel pipe pile with a spiral portion inserted and a cover is welded to it; and
FIG. 9A is a plan diagram, FIG. 9B a front diagram and FIG. 9C a side diagram showing a cover.

### Explanation of Symbols

- 1: spiral steel pipe pile
- 2: foundation pile
- 3: steel pipe
- 4: spiral portion
- 5: slit
- 6: cover
- 7: foundation
- 8: welded portion

### Best Mode for Carrying Out the Invention

As shown in FIG. 1, the spiral steel pipe pile according to the present invention is gained by joining a spiral portion (4) to the end of a steel pipe (3). The spiral steel pipe pile is driven into the ground using a pressing force and forceful rotation using a civil engineering machine, and therefore, the joint portion needs to be strong enough to be able to bear this.

In accordance with one method for joining the spiral portion to the steel pipe, first a spiral portion (4) is fabricated by twisting flat steel having the same or a slightly greater width than the outer diameter of the steel pipe.

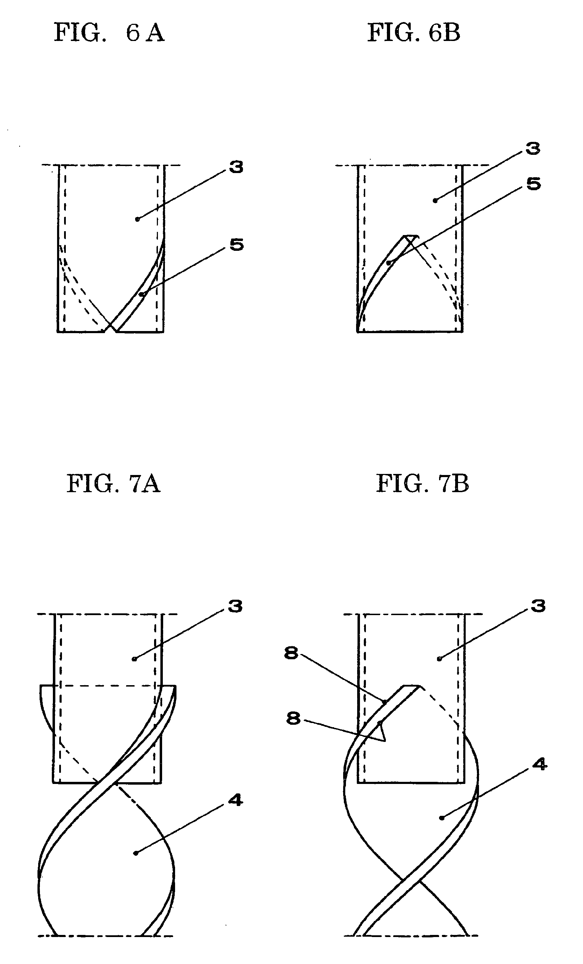

As shown in FIG. 6, a slit (5) in spiral form is created at the lower end of the steel pipe so that the spiral portion can be inserted. Next, as shown in FIG. 7, the spiral portion is inserted into the slit in the stell pipe in such a state that the steel pipe and the spiral portion share the same center line, and the steel pipe and the spiral portion are welded together along the slit in the steel pipe.

When a steel pipe (3) and a spiral portion (4) are joined together for a conventional spiral pile, the spiral portion is inserted into the cylindrical steel pipe before welding, and therefore, the two can be welded together only at the opening for insertion, and sufficient strength cannot be gained. According to the present invention, the spiral portion is gained by twisting flat steel that is slightly wider than conventionally, so that the outer edges stick out from the steel pipe, making welding easy and the welded portion sufficiently long, and therefore, it becomes possible to attach the spiral portion firmly to the end of the steel pipe while allowing it to maintain its own strength.

Here, the width of the flat steel may be the same as the outer diameter of the steel pipe, but this is the minimum width, and a slightly greater width makes welding more effective.

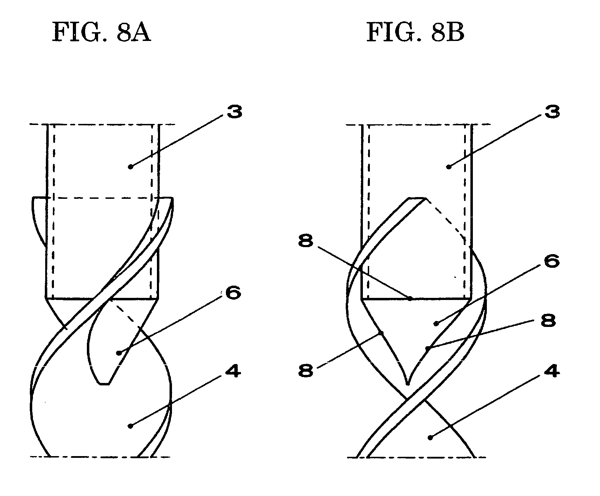

Furthermore, there is a hole in the spiral insertion portion at the lower end of the steel pipe, and therefore, a cover (6) in conical form as that shown in FIG. 8 is welded to the pile so as to cover the hole.

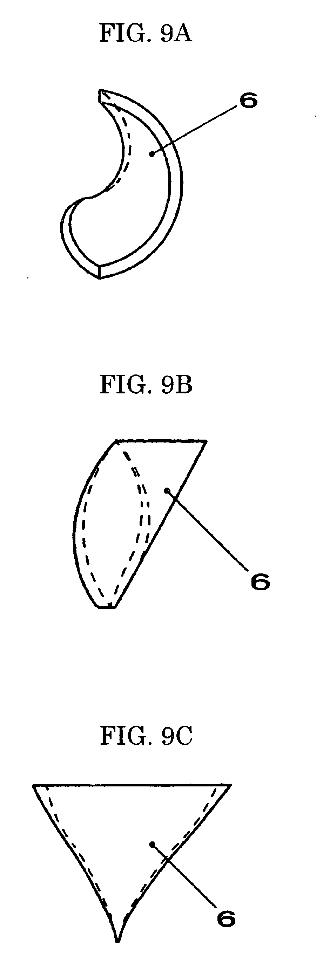

This cover is made of a steel plate in conical form, as shown in FIG. 9, which is divided in two, so that the portion that makes contact with the spiral portion is curved and there are no gaps between the cover and the spiral portion.

The two pieces of the cover are welded to the pile from the front and rear of the spiral portion, and thus, soil can be prevented from getting into the steel pipe when the spiral steel pipe pile is screwed into the ground, making it easy for the steel pipe to be driven into the ground.

Next, the bucket is removed from a backhoe and instead the spiral steel pipe pile attached to the hydraulic auger, or the spiral steel pipe pile is attached to the auger of a bore piling truck, and then the spiral steel pipe pile is screwed into the ground. Alternatively, the spiral steel pipe pile may be screwed into the ground using a dedicated machine. At this time, the spiral steel pipe pile is rotated and pressed in at a rotational speed and speed of insertion in accordance with the pitch of the spiral.

Thus, the spiral portion is screwed into the ground without disturbing the stratum at all. Thus, the steel pipe portion is pushed into the ground while spreading the soil outward after the cover (6) portion hits the ground, and therefore, there is little friction between the soil and the surface of the steel pipe, and the resistance to loads in the vertical direction is high.

### First Embodiment

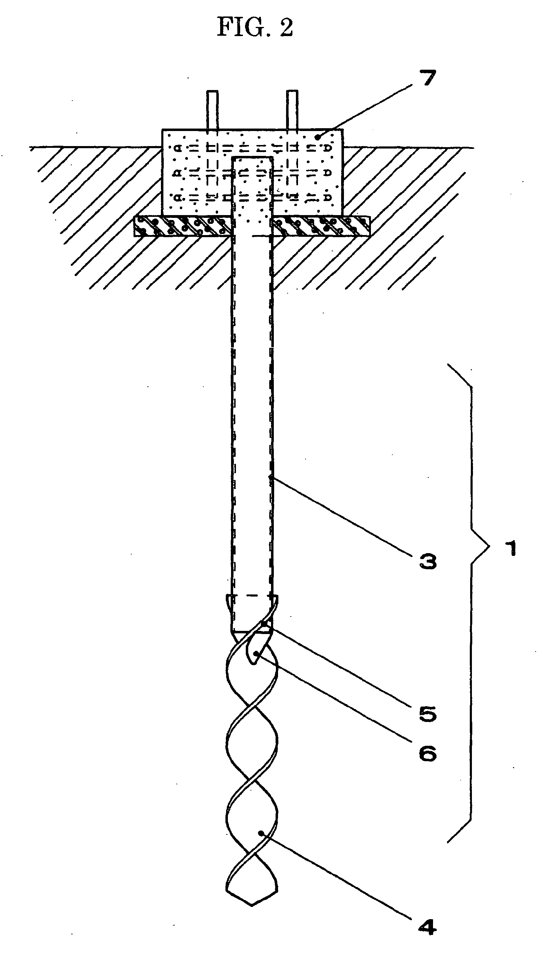

Next, the foundation for the spiral steel pipe pile is described using the first embodiment in reference to FIG. 2. First, a shallow hole is dug in the ground and the spiral steel pipe pile (1) is attached to a civil engineering machine, as described above, and stood upright at a predetermined point in the hole, and then screwed into the ground by applying a rotational force and a downward pressing force. After the pile is screwed into the ground with an end portion sticking out, a foundation (7) is constructed of reinforced concrete with an anchor bolt sticking out on top, and the hole is filled in, and thus the work is completed.

### Second Embodiment

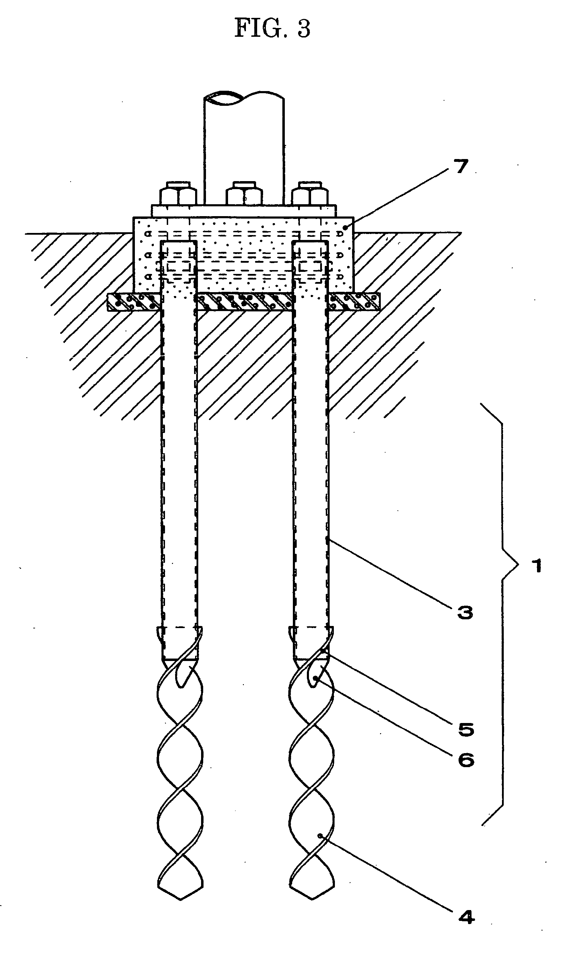

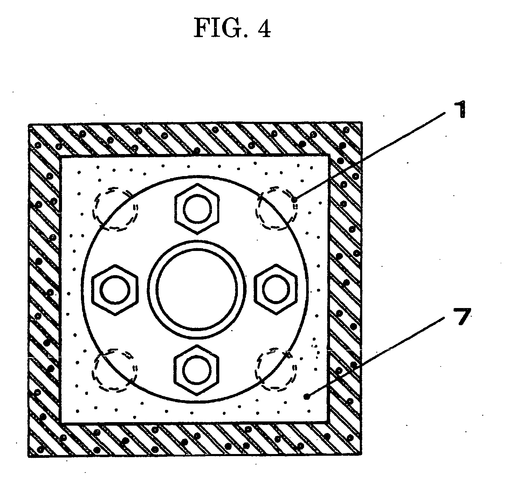

In the case of a foundation for a larger building, a number of spiral steel pipe piles are used, so as to increase the resistance to loads. FIGS. 3 and 4 show the second embodiment, where four spiral steel pipe piles are used.

### Industrial Applicability

In one example of the present spiral steel pipe pile, the spiral portion has a width of 150 mm, a thickness of 190 mm and a length of 1800 mm, and the steel pipe has a diameter of 114.3 mm, a thickness of 4.5 mm and a length of 5500 mm, which makes the total length 7200 mm with an insertion portion of 100 mm.

This spiral steel pipe pile can be used for various applications, including structures, buildings and bases for road signs.

In particular, the spiral portion has excellent resistance to the ground in the vertical direction, and therefore, a long spiral portion has excellent performance in soft ground.

Furthermore, the present invention makes it possible to fabricate a larger spiral steel pipe pile, and as a result, it becomes possible to use spiral steel pipe piles for foundations for medium- to large-sized buildings and medium-sized bridges.

## Claims

1. A spiral steel pipe pile (1), comprising a steel pipe (3), a spiral portion (4) gained by twisting flat steel having the same or a greater width than the outer diameter of the steel pipe, and a spiral slit (5) through which the spiral portion is inserted at the lower end of the steel pipe, **characterized in that** the spiral portion (4) is inserted into the slit (5) and the steel pipe and the spiral portion are welded together in such a state as to share the same center line, and a cover (6) in conical form is welded to the lower end of the steel pipe so that a hole in the spiral insertion portion is covered.

## Patentansprüche

1. Ein Spiral-Stahlrohrpfahl (1) umfassend ein Stahlrohr (3), ein Spiral-Teil (4), erhalten durch verdrehen von flachem Stahl mit der gleichen oder einer größeren Weite als der Außendurchmesser des Stahlrohrs, und einen Spiral-Schlitz (5), durch den der Spiral-Teil an dem unteren Ende des Stahlrohrs eingeführt ist, **dadurch gekennzeichnet, dass** der Spiral-Teil (4) in den Schlitz (5) eingeführt ist und das Stahlrohr und der Spiral-Teil zusammengeschweißt sind, in einem solchen Zustand, dass sie die gleiche Mittellinie aufweisen, und dass eine Abdeckung (6) in konischer Form an das untere Ende des Stahlrohrs geschweißt ist, so dass eine Öffnung in dem Spiral-Einführteil abgedeckt ist.

## Revendications

1. Pieu tubulaire en acier en spirale (1), comprenant un tuyau en acier (3), une partie en spirale (4) obtenue en torsadant de l'acier plat d'une largeur équivalente ou supérieure au diamètre extérieur du tuyau en acier, et une fente en spirale (5) à travers laquelle la partie en spirale est insérée au niveau de l'extrémité inférieure du tuyau en acier, **caractérisé par le fait que** la partie en spirale (4) est insérée dans la fente (5) et que le tube en acier et la partie en spirale sont soudés l'un à l'autre de manière à partager la même ligne centrale, et qu'un couvercle (6) de forme conique est soudé à l'extrémité inférieure du tube en acier de telle sorte qu'un orifice dans la partie d'insertion en spirale est recouverte.
